# EUROPEAN PATENT APPLICATION

(11) **EP 4 583 389 A2**
(43) Date of publication of application: **09.07.2025**
(21) Application number: 25150444.5
(22) Date of filing: 07.01.2025
(51) Int. Cl.: H02M 1/36, H02J 3/00, H02J 3/32, H02J 7/34

(54) **ENERGY STORAGE SYSTEM AND START METHOD THEREOF**

(30) Priority: 08.01.2024 CN 202410027508
(71) Applicant: Delta Electronics (Shanghai) Co., Ltd., Shanghai 201209 (CN)
(72) Inventor: WU, Haoyu, Shanghai, 201209 (CN); WANG, Yafeng, Shanghai, 201209 (CN); XIA, Junhao, Shanghai, 201209 (CN); ZHANG, Tengshen, Shanghai, 201209 (CN); ZHONG, Linfeng, Shanghai, 201209 (CN)
(74) Representative: SSM Sandmair

(57) **Abstract**

The invention provides an energy storage system, including: an energy storage converter having an AC end electrically connected to an AC power supply (GRID) or a load (AC LOAD), and a DC end electrically connected to a DC bus; at least one battery unit (1, 2), each electrically connected to the DC bus through a DC/DC converter (DD1, DD2); and a start unit (BS1) electrically connected between a battery unit (2) and the DC bus. When the energy storage system starts through the battery unit (2), the start unit (BS1) establishes a bus voltage to a set voltage through electric power of the battery unit (2). The energy storage system of the invention has black start capability, a simple structure and a low cost.

## Description

### BACKGROUND OF THE INVENTION

### 1. Field of the Invention

The invention relates to an energy storage system, and particularly to an energy storage system and a start method thereof.

### 2. Related Art

Self-recovery of the system after power failure of the grid at a large area is generally referred to black start. When the system is all power failure, the entire system is shut down due to fault and is in a full "black" state. When the system needs to start, the equipment having self-start capability in the system firstly start, and then drive operation of the equipment having no self-start capability, thereby gradually expanding recovery range of the system. And finally achieve recovery of the entire system without assistance of other devices.

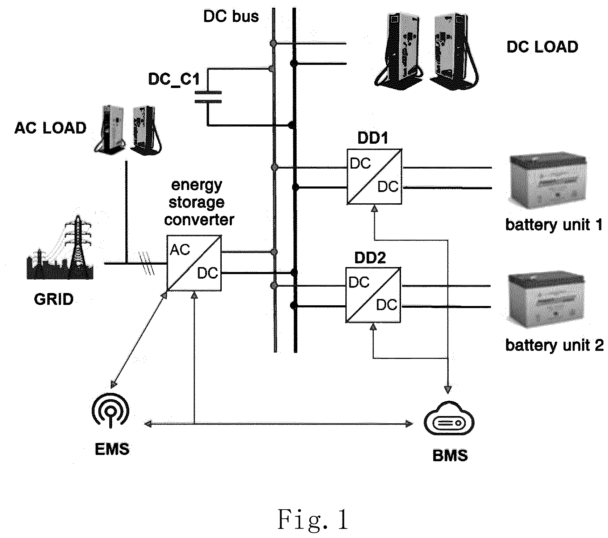

The energy storage system is used as an active system, and after power failure of the grid, energy storage batteries can rapidly supply power for black start equipment. As shown in FIG. 1, in a black start mode, a DC/DC converter in the corresponding conversion unit is controlled to release electric energy stored in the corresponding battery pack to charge a DC bus. The power of the DC bus supports operation of a power control system (PCS), thereby establishing a three-phase voltage. The DC/DC converters DD1 and DD2 work in a buck mode, and can also work in a boost mode to satisfy a wide variation range of a voltage of the battery unit and a voltage of the DC bus.

When the system black starts, the voltage of the DC bus shall be established by an input of the DC/DC converter. Since a switch circuit of the DC/DC converter has antiparallel diodes, there is a huge surge impulse current when starting. Precharge resistors are arranged when establishing the voltage of the DC bus. However, in design, the power of the precharge resistor is relatively small, which cannot precharge a mF-level capacitor on the DC bus. Moreover, some DC devices connected to the DC bus self-starts when detecting the bus voltage to reach a threshold voltage, which lowers the bus voltage. It is difficult to control an output voltage to reach a target value through the precharge resistor scheme, causing black start failure.

In conclusion, the existing energy storage system has many issues when black starting, and it is necessary to make improvement.

### SUMMARY OF THE INVENTION

With respect to the deficiencies, an object of the invention is to provide an energy storage system having self-start capability, which can black start successfully, and has a simple structure and a low cost.

To achieve the object, the invention provides an energy storage system, including: an energy storage converter having an AC end electrically connected to an AC power supply or a load, and a DC end electrically connected to a DC bus; at least one battery unit, each electrically connected to the DC bus through a DC/DC converter; and a start unit electrically connected between a battery unit and the DC bus. When the energy storage system starts through the battery unit, the start unit establishes a bus voltage to a set voltage through power of the battery unit.

Alternatively, the start unit includes: a start circuit having an input end electrically connected to the battery unit; and a switching circuit having one end electrically connected to an output end of the start circuit, and the other end electrically connected to the DC bus.

Alternatively, the set voltage is a voltage of the battery unit; and the switching circuit is a diode having an anode electrically connected to a positive output end of the start circuit, and a cathode electrically connected to the DC bus.

Alternatively, when the bus voltage is less than the set voltage, the switching circuit is conducted, and the start circuit outputs power to the DC bus; and when the bus voltage is greater than the set voltage, the switching circuit is turned off, and the start circuit stops outputting electric power to the DC bus.

Alternatively, the set voltage is a voltage of the battery unit; and the switching circuit is a diode having an anode electrically connected to a positive output end of the start circuit, and a cathode electrically connected to the DC bus.

Alternatively, after the start unit establishes the bus voltage to the set voltage, the at least one DC/DC converter operates to establish the bus voltage from the set voltage to a target voltage through power of the battery unit.

Alternatively, the energy storage system further includes a battery management unit electrically connected to the start unit and the DC/DC converter. When the energy storage system starts through the battery unit, the battery management unit outputs a start command to the start unit, and the start unit operates; and when the start circuit establishes the bus voltage to the set voltage, the battery management unit outputs a control signal to the DC/DC converter, and the DC/DC converter operates.

Alternatively, the start circuit is a precharge circuit, and includes a precharge resistor, a precharge switch and a main switch.

Alternatively, the start circuit includes a buck circuit having at least one controllable switch, and PWM modulation is performed to the at least one controllable switch.

Alternatively, an output voltage of the buck circuit is gradually increased by controlling a duty ratio of the at least one controllable switch, such that the bus voltage is gradually increased from zero to the set voltage.

Alternatively, the set voltage is equal to the voltage of the battery unit, the switching circuit is a diode, and when the bus voltage is greater than the voltage of the battery unit, the diode is reversely cut off.

Alternatively, the buck circuit is a flying capacitor switch circuit, and includes an input capacitor, a first resistor, a second resistor, a third resistor, a fourth resistor, a flying capacitor, a first switching tube, a second switching tube, a third switching tube, a fourth switching tube and an output inductor; wherein the input capacitor has a first end electrically connected to the precharge circuit, and a second end electrically connected to an input negative end; the first resistor, the second resistor, the third resistor and the fourth resistor are sequentially connected in series between the first end and the second end of the input capacitor; the first switching tube, the second switching tube, the third switching tube and the fourth switching tube are sequentially connected in series between the first end and the second end of the input capacitor; a second end of the second switching tube is electrically connected to a first end of the output inductor; the flying capacitor is electrically connected in parallel with the second switching tube and the third switching tube; the first resistor and the first switching tube are connected in parallel, the second resistor and the third resistor are connected in parallel with the flying capacitor, and the fourth resistor and the fourth switching tube are connected in parallel; a second end of the output inductor is electrically connected to the switching circuit.

Alternatively, duty ratios of the first switching tube and the second switching tube are controlled to gradually increase, and duty ratios of the third switching tube and the fourth switching tube are controlled to gradually decrease, such that an output voltage of the flying capacitor switch circuit is gradually increased, and the bus voltage is gradually increased from zero to the target voltage.

The invention further provides a start method of an energy storage system, the energy storage system including: an energy storage converter having an AC end electrically connected to an AC power supply or a load, and a DC end electrically connected to a DC bus; at least one battery unit electrically connected to a low-voltage port of a DC/DC converter; and a high-voltage port of each DC/DC converter electrically connected to the DC bus. The method includes: providing a start unit electrically connected between a battery unit and the DC bus; and when the energy storage system starts through the battery unit, operating the start unit to deliver power of the battery unit to the DC bus, thereby establishing a bus voltage to a set voltage.

Alternatively, when the bus voltage is established to the set voltage, operate the DC/DC converter to deliver the power of the battery unit to the DC bus, thereby establishing the bus voltage from the set voltage to a target voltage.

Alternatively, when the DC/DC converter operates and the bus voltage is greater than the set voltage, the start unit is turned off.

Alternatively, the method further includes: judging whether to start the energy storage system through the battery unit; when a judging result is yes, outputting a start command to the start unit; and
when the bus voltage is equal to the set voltage, outputting a control signal to the DC/DC converter.

### BRIEF DESCRIPTION OF THE DRAWINGS

FIG. 1 is a structural diagram of the existing energy storage system.
FIG. 2 is a structural diagram of the energy storage system provided in one embodiment of the invention.
FIG. 3 is a structural diagram of a first embodiment of the energy storage system provided in one embodiment of the invention.
FIG. 4 is a structural diagram of a second embodiment of the energy storage system provided in one embodiment of the invention.
FIG. 5 is a topology diagram of precharging the first capacitor in the start unit of the energy storage system of FIG. 4.
FIG. 6 is a topology diagram of connecting the second precharge circuit after end of precharging the first capacitor in the start unit of the energy storage system of FIG. 4.
FIG. 7 is a schematic diagram of a pulse signal of the flying capacitor switch circuit in the start unit of the energy storage system of FIG. 4.
FIG. 8 is a schematic diagram of a current loop of a first switch mode of the flying capacitor switch circuit in the start unit of the energy storage system of FIG. 4.
FIG. 9 is a schematic diagram of a current loop of a second switch mode of the flying capacitor switch circuit in the start unit of the energy storage system of FIG. 4.
FIG. 10 is a schematic diagram of a current loop of a third switch mode of the flying capacitor switch circuit in the start unit of the energy storage system of FIG. 4.
FIG. 11 is a schematic diagram of a current loop of a fourth switch mode of the flying capacitor switch circuit in the start unit of the energy storage system of FIG. 4.

### DETAILED EMBODIMENTS OF THE INVENTION

To make the object, technical solution and advantage of the invention clearer, hereinafter the invention is further explained in details with reference to the accompanying drawings and the embodiments. It shall be understood that the described specific embodiments are only to explain the invention, but not limited to the invention.

It shall be noted that reference of "one embodiment", "embodiments" and "exemplary embodiments" in the specification refers to that the described embodiment may include specific features, structures or properties, but it is not that every embodiment must include these specific features, structures or properties. Moreover, such expression does not refer to the same embodiment. Further, when the specific features, structures or properties are described with reference to the embodiments, regardless of clear description, it has indicated that such feature, structure or property combined in other embodiments is within the knowledge range of those skilled in the art.

Moreover, the specification and subsequent claims use some phrases to refer to specific components or members, and those ordinary in the art shall understand that manufacturers may name different nouns or terms to be the same component or member. The specification and subsequent claims do not use the difference of names as the way of distinguishing the component or member, but using the difference of functions of the component or member as the distinguishing criterion. "comprise" and "include" mentioned in the whole specification and subsequent claims are open words, so they shall be understood to be "include but not limited to". Moreover, the word "connection" includes any direct or indirect electrical connection means. Indirect electrical connection means includes connecting through other devices.

Intermittent power generation features of the clean energy brings a certain challenge to safe and stable operation of the grid. Energy storage technology is an effective measure to suppress power fluctuation of the grid, and enhance quality of electric energy, and is applied to clean energy power generation system. The energy storage system is connected to the grid, and uses the common DC bus as an energy transfer carrier. The constant control of the DC bus voltage determines operation modes of the devices in the energy storage system.

The disclosure provides an energy storage system which includes an energy storage converter, at least one battery unit, at least one DC/DC converter and a start unit. The energy storage converter has an AC end electrically connected to an AC power supply or a load, and a DC end electrically connected to a DC bus. Each battery unit is electrically connected to the DC bus through the DC/DC converter, the battery unit is electrically connected to a low-voltage port of the DC/DC converter, and the DC bus is electrically connected to a high-voltage port of each DC/DC converter. In one possible embodiment, the energy storage system includes a plurality of battery units and a plurality of DC/DC converters connected in one-to-one correspondence, and the high-voltage ports of the plurality of DC/DC converters are coupled in parallel to the DC bus. The start unit has an input end electrically connected to a battery unit, and an output end electrically connected to the DC bus. When the energy storage system starts from the battery unit, for example, the energy storage system is in a full black condition, the start unit operates to deliver the electric power of the battery unit to the DC bus, thereby establishing the bus voltage to a set voltage.

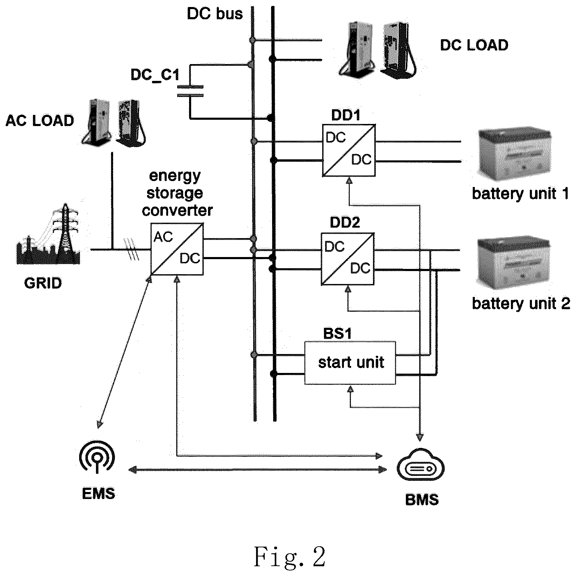

FIG. 2 shows an energy storage system provided in one embodiment of the invention. As shown in FIG. 2, the energy storage system 1 includes an energy storage converter, DC/DC converters DD1 and DD2, battery units 1 and 2, and a start unit BS1. The DC/DC converter DD1 is electrically connected to the battery unit 1, and the DC/DC converter DD2 is electrically connected to the battery unit 2. The DC/DC converters DD1 and DD2 are bidirectional buck-boost converters, such as, three-level flying capacitor converters, for regulating a battery voltage and stabilizing a DC bus voltage. The number of DC/DC converters and battery units is not limited to two, can be one or more, and is mainly set corresponding to a capacity of the energy storage system and/or a power of the battery unit.

The start unit BS1 has an input end electrically connected to the battery unit 2, and an output end electrically connected to the DC bus. The start unit BS1 is connected in parallel to the DC/DC converter DD2. The input end of the start unit BS1 and a low-voltage port of the DC/DC converter DD2 are coupled in parallel to the battery unit 2, and the output end of the start unit BS1 and a high-voltage port of the DC/DC converter DD2 are coupled in parallel to the DC bus. The start unit BS 1 only operates when the energy storage system starts from the battery unit. When the start unit BS1 operates, the DC/DC converter DD2 is correspondingly bypassed. The start unit BS 1 shares the start process of the DC/DC converter. The start unit outputs power to the DC bus, and controls the bus voltage. The bus voltage can be established from zero to the set voltage by the start unit. And then the DC/DC converters operate to output power to the DC bus, and controls the bus voltage. The bus voltage can be established from the set voltage to a target voltage by the DC/DC converters. It is unnecessary for the DC/DC converters to establish the bus voltage from zero to the target voltage, and precharge resistors inside the DC/DC converter are decoupled from a DC device connected on the bus and mF-level capacitors of the bus.

The number of start units is not limited to one. In some embodiments, the energy storage system includes a plurality of start units. For example, the energy storage system 1 may further include another start unit, and the another start unit and the DC/DC converter DD 1 are coupled in parallel between the battery unit 1 and the DC bus.

When the energy storage system 1 black starts, the start unit operates to release electric energy of the battery unit 2, and supplies electric energy to the DC bus. The start unit controls the bus voltage to establish the bus voltage to the set voltage. This process is only completed by the start unit, and the DC/DC converter is bypassed. After the bus voltage is established to the set voltage, the DC/DC converters start to operate. The DC/DC converters transform electric energy of the battery units, and supply power to the DC bus. The DC/DC converters control the bus voltage to establish the bus voltage from the set voltage to the target voltage. After the DC/DC converters start, the start unit stops operation. The target voltage is a reference voltage of the DC bus. After the DC bus voltage is established to the reference voltage, the energy storage converter starts through the power of the DC bus, such that the energy storage system 1 resumes operation. After start completes, the DC/DC converter performs boost or buck conversion to regulate a battery voltage, and stabilize the bus voltage. The start unit exits operation. The start unit is awaked until the energy storage system shall start from the battery unit next time.

The start unit includes a start circuit and a switching circuit. The start circuit has an input end electrically connected to the battery unit, and an output end electrically connected to the DC bus through a switching circuit. The switching circuit includes a turn-on mode and a turn-off mode. In the turn-on mode, the start circuit inputs power to the DC bus through the conducted switching circuit, and in the turn-off mode, the switching circuit blocks a power transmission path between the start circuit and the DC bus. Specifically, when the bus voltage is less than the set voltage, the switching circuit is on, and the start circuit outputs power to the DC bus; and when the bus voltage is greater than the set voltage, the switching circuit is off, and the start circuit stops outputting power to the DC bus.

When the set voltage is a voltage of the battery unit, the switching circuit may select a diode. An anode of the diode is electrically connected to a positive output end of the start circuit, and a cathode of the diode is electrically connected to the DC bus. At this time, the switching circuit is unidirectionally conducted, and the bus voltage outputted by the start unit does not exceed the voltage of the battery unit. When the bus voltage is less than the voltage of the battery unit, the diode is positively conducted, and the start circuit delivers power of the battery unit to the DC bus. When the bus voltage is greater than or equal to the voltage of the battery unit, the diode is reversely cut off, and the start circuit cannot deliver power to the DC bus, while the DC bus cannot also reversely deliver energy to the battery unit.

When the energy storage system starts from the battery side, the start circuit establishes the bus voltage from zero to the set voltage. Then the DC/DC converter starts to boost the voltage of the battery unit and output the voltage boosted to the DC bus, and the bus voltage is established from the set voltage to the target voltage. When the DC/DC converter starts and the bus voltage is greater than the set voltage, the switching circuit is changed to the turn-off mode, and the start unit stops operation to ensure seamless switching between the start unit and the DC/DC converter.

As shown in FIG. 2, the energy storage system 1 further includes an Energy Management System (EMS) and a Battery Management System (BMS). The EMS is in communication with the energy storage converter and the BMS. The EMS receives multiple parameters of the energy storage converter, and determines whether start the energy storage system 1 through the battery unit based on the multiple parameters of the energy storage converter. Further, the EMS sends a command of starting from the battery unit to the BMS when the determined result is yes. The command indicates to start the energy storage system 1 through the battery unit. For example, the EMS determines that the energy storage system 1 enters into a black condition according to multiple parameters of the energy storage converter, and sends a black start command to the BMS. The BMS outputs a start signal to the start unit BS1 after receiving the black start command, controls the start unit to operate. The start unit release electric energy stored in the corresponding battery unit to increase the bus voltage from zero to the set voltage. When the bus voltage of the DC bus is increased to the set voltage, the BMS controls the DC/DC converter to output voltage, and the bus voltage increases from the set voltage to the target voltage. When the bus voltage is greater than the set voltage, the switching circuit turns off. After the bus voltage is established to the target voltage, the BMS may control the start unit to exit operation, and wait for the next start command.

The process of establishing the bus voltage from zero to the target voltage includes two stages. The start unit undertakes the first stage. The bus voltage is established from zero to the set voltage during the first stage. The DC/DC converter undertakes the second stage. The bus voltage is established from the set voltage to the target voltage during the second stage. The precharge resistors of the DC/DC converter are decoupled from DC devices connected on the bus and a mF-level capacitor DC_C1 of the bus. The start unit and the DC/DC converter are both controlled by the BMS, thereby achieving seamless switching between the start unit and the DC/DC converter, and stably establishing the bus voltage.

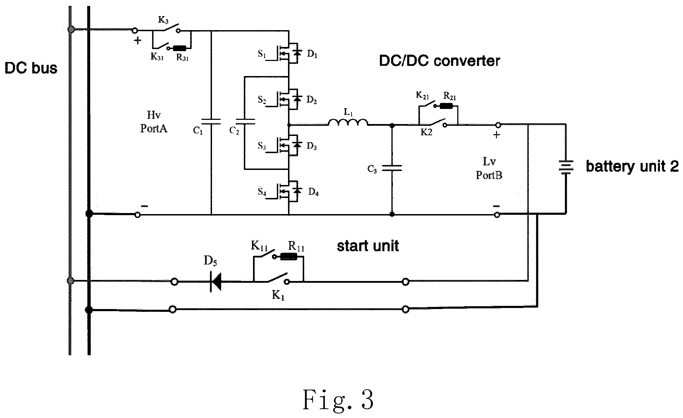

FIG. 3 shows the DC/DC converter and the start unit provided in one embodiment of the invention. In this embodiment, the set voltage is the voltage of the battery unit. As shown in FIG. 3, the start circuit in the start unit is a first precharge circuit, and the switching circuit in the start unit is the diode D₅. The first precharge circuit has one end electrically connected to a positive electrode of the battery unit, and the other end electrically connected to an anode of the diode D₅. And a cathode of the diode D₅ is electrically connected to the DC bus. The first precharge circuit includes a first precharge resistor R₁₁, a first precharge switch K₁₁ and a first main switch K₁. The first precharge resistor R₁₁ and the first precharge switch K₁₁ are connected in series, and the first main switch K₁ is connected in parallel with the series connection of the first precharge resistor R₁₁ and the first precharge switch K₁₁.

When determining to start the energy storage system through the battery unit, the battery management unit BMS sends the start signal and controls the first precharge switch K₁₁ closed. The first precharge resistor R₁₁ is connected, the battery unit charges the DC bus, and the first precharge resistor R₁₁ is configured to limit a charging current. The bus voltage is gradually increased from zero. When the bus voltage approaches the voltage of the battery unit, the first precharge switch K₁₁ is turned off, the first main switch K₁ is closed, and the bus voltage continues to increase and is equal to the voltage of the battery unit finally. A surge current can be suppressed by selecting an appropriate first precharge resistor Rn, and the self-start equipment on the DC bus can normally operate. In actual application, the line has an impedance, and the diode also has a voltage drop, so "equal to", "stabilize", "approach", "substantially stabilize" and "substantially equal to" in the disclosure allow an error, for example, +/- 10%, preferably, +/- 5%.

Please continue to refer to FIG. 3, the start unit and the DC/DC converter are coupled in parallel between the battery unit and the DC bus. In this embodiment, the DC/DC converter is a three-level flying capacitor converter which can achieve bidirectional conversion. A low-voltage port Lv PortB of the DC/DC converter is electrically connected to the battery unit, and a high-voltage port Hv PortA of the DC/DC converter is electrically connected to the DC bus. The DC/DC converter includes a second precharge circuit, a first capacitor C₃, an inductor L₁, a switch bridge arm, a flying capacitor C₂, a second capacitor C₁, and a third precharge circuit. The second precharge circuit has one end electrically connected to a positive end of the low-voltage port Lv PortB, i.e., a positive electrode of the battery unit, and the other end electrically connected to a first end of the first capacitor C₃. The second precharge circuit includes a second precharge resistor R₂₁, a second precharge switch K₂₁ and a second main switch K₂. The second precharge resistor R₂₁ and the second precharge switch K₂₁ are connected in series, and the second main switch K₂ is connected in parallel with the series connection of the second precharge resistor R₂₁ and the second precharge switch K₂₁. A second end of the first capacitor C₃ is electrically connected to a negative end of the low-voltage port Lv PortB, i.e., a negative electrode of the battery unit. The inductor L₁ has a first end electrically connected to the first end of the first capacitor C₃, and a second end electrically connected to a central point of the switch bridge arm. The switch bridge arm includes a first switching tube S₁, a second switching tube S₂, a third switching tube S₃ and a fourth switching tube S₄ sequentially connected in series, and each switching tube includes an antiparallel diode. A second end of the second switching tube S₂ and a first end of the third switching tube S₃ are connected to form the central point of the switch bridge arm. The flying capacitor C₂ has one end electrically connected to a first end of the second switching tube S₂, and the other end electrically connected to a second end of the third switching tube S₃. A first end of the second capacitor C₁ is electrically connected to a first end of the first switching tube S₁, and a second end of the second capacitor C₁ and a second end of the fourth switching tube S₄ are electrically connected to a negative end of the high-voltage port Hv PortA. The third precharge circuit has one end electrically connected to a positive end of the high-voltage port Hv PortA, and the other end electrically connected to the first end of the second capacitor C₁. The third precharge circuit includes a third precharge resistor R₃₁, a third precharge switch K₃₁ and a third main switch K₃. The third precharge resistor R₃₁ and the third precharge switch K₃₁ are connected in series, and the third main switch K₃ is connected in parallel with the series connection of the third precharge resistor R₃₁ and the third precharge switch K₃₁.

When the start unit establishes the DC bus voltage to the set voltage, the battery management unit BMS outputs a control signal to the DC/DC converter for controlling the third precharge switch K₃₁ closed. Seamless switching between the start unit and the DC/DC converter is achieved. After the third precharge switch K₃₁ is closed, the third precharge resistor R₃₁ is connected, and the DC bus precharges the second capacitor C₁. When a voltage of the second capacitor C₁ approaches the set voltage, the third precharge switch K₃₁ is open, the third main switch K₃ is closed, and the voltage of the second capacitor is equal to the set voltage. In this embodiment, the set voltage is equal to the voltage of the battery unit.

The second precharge switch K₂₁ is closed, the second precharge resistor R₂₁ is connected, and the battery unit precharges the first capacitor C₃. When a voltage of the first capacitor approaches the voltage of the battery unit, the second precharge switch K₂₁ is open, the second main switch K₂ is closed, and the voltage of the first capacitor is equal to the voltage of the battery unit. The second precharge resistor R₂₁ only shall suppress a surge current when precharging the first capacitor, and is decoupled from devices on the DC bus. The resistance of the second precharge resistor is small, and the cost is low. After precharging the first capacitor, PWM control is performed to the switching tubes S₁~S₄, and the DC/DC converter boosts the voltage of the battery unit, thereby controlling the bus voltage to increase from the set voltage to the target voltage. Structure of the DC/DC converter in the disclosure is not limited thereto, and may be flexibly designed according to actual requirements.

When the DC/DC converter operates, the bus voltage is greater than the set voltage such that the diode D₅ is reversely cut off. And the start unit stops transmitting electric energy. When the DC/DC converter establishes the bus voltage to the target voltage, the first main switch K₁ is turned off, and the start unit exits to wait for next start command.

The start unit provided in this embodiment is applicable to an energy storage system with a simple structure. When the DC equipment on the DC bus or a capacitor of the DC bus changes, the first precharge resistor R₁₁ shall be adjusted.

In another alternative embodiment, the start circuit includes a buck circuit and a precharge circuit. The precharge circuit has a first end electrically connected to a positive electrode of the battery unit, and a second end electrically connected to the buck circuit. The buck circuit means a circuit which can reduce an output voltage relative to an input voltage. The buck circuit includes at least one input capacitor and at least one controllable switch. The at least one input capacitor has one end electrically connected to the second end of the precharge circuit, and the other end electrically connected to a negative electrode of the battery unit. The precharge circuit precharges the input capacitor. After precharging the input capacitor, PWM modulation is performed on the at least one controllable switch by a control circuit such as BMS, such as BMS. The buck circuit bucks the voltage of the battery unit. When specifically implementing, a duty ratio of the at least one controllable switch is controlled, such that the bus voltage is gradually increased from zero to the set voltage. For example, the duty ratio of the at least one controllable switch is adjusted by closed loop control. The duty ratio of the at least one controllable switch is gradually increased, such that an output voltage of the buck circuit is gradually increased. And a slope of a voltage change curve establishing the bus voltage is controlled by adjusting the duty ratio of the at least one controllable switch, such that the process of establishing the bus voltage from zero to the set voltage is flexibly controllable.

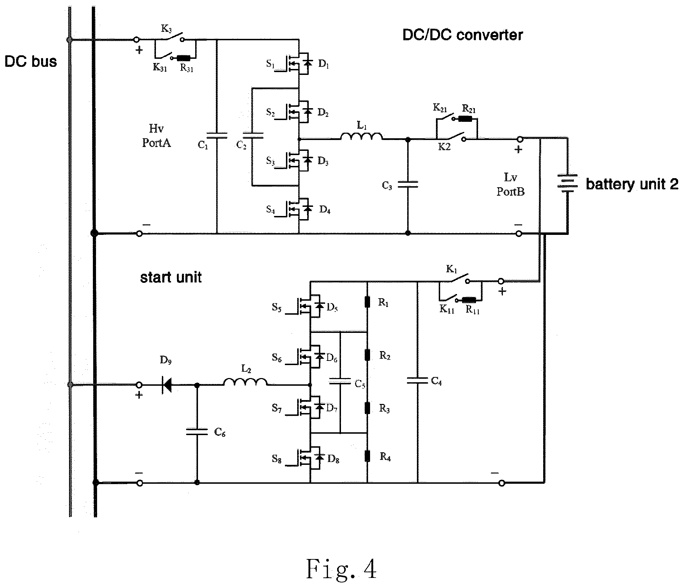

FIG. 4 shows the DC/DC converter and the start unit according to another embodiment of the invention. As shown in FIG. 4, the start unit includes a start circuit and a switching circuit. The start circuit is a flying capacitor switch circuit, and the circuit structure is substantially the same as that of the DC/DC converter, which facilitates modular implementation of the circuit. The switching circuit is a diode D₉. Connection directions of the flying capacitor switch circuit in the start unit and the circuit in the DC/DC converter are opposite. And an output end of the start circuit is electrically connected to the diode D₉, such that the flying capacitor switch circuit in the start unit becomes a unidirectional buck circuit.

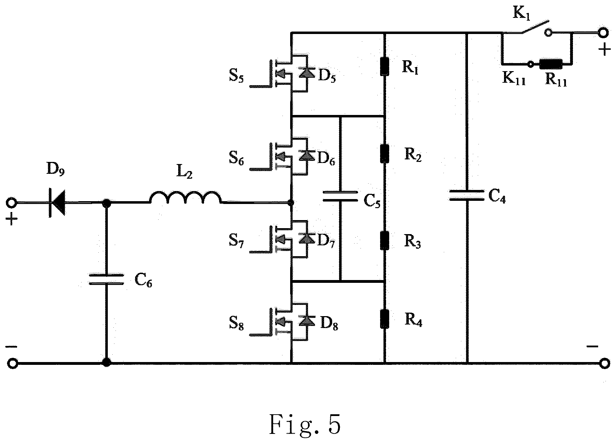

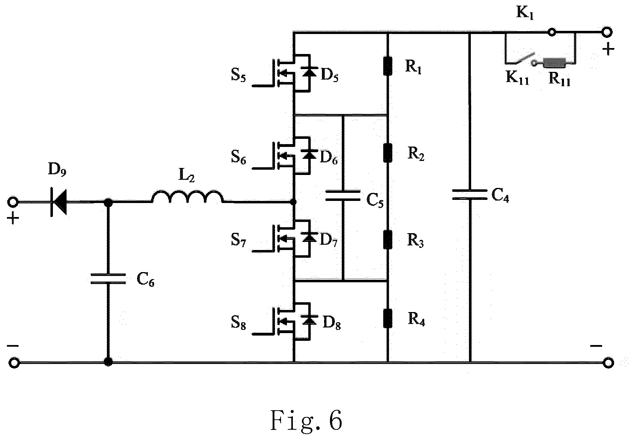

Please continue to refer to FIG. 4. The flying capacitor switch circuit has an input end electrically connected to the battery unit, and an output end electrically connected to the DC bus through the diode D₉. The flying capacitor switch circuit includes a first precharge circuit, an input capacitor C₄, resistors R₁ to R₄, a flying capacitor C₅, a switch bridge arm, an inductor L₂, and an output capacitor C₆. The first precharge circuit has one end electrically connected to an input positive end, i.e., a positive electrode of the battery unit, and the other end electrically connected to a first end of the input capacitor C₄. The first precharge circuit includes a first precharge resistor R₁₁, a first precharge switch K₁₁ and a first main switch K₁. The first precharge resistor R₁₁ and the first precharge switch K₁₁ are connected in series, and the first main switch K₁ is connected in parallel with a series connection of the first precharge resistor R₁₁ and the first precharge switch K₁₁. A second end of the input capacitor C₄ is electrically connected to an input negative end, i.e., a negative electrode of the battery unit. The input end of the flying capacitor switch circuit is similar with the high-voltage port Hv PortA of the DC/DC converter, and is changed to be electrically connected to the battery unit in the start unit. The output end of the flying capacitor switch circuit is similar with the low-voltage port Lv PortB of the DC/DC converter, and is changed to be electrically connected to the DC bus in the start unit. The first resistor R₁, the second resistor R₂, the third resistor R₃ and the fourth resistor R₄ are sequentially connected in series, and then connected in parallel with the input capacitor C₄. The switch bridge arm includes a fifth switching tube S₅, a sixth switching tube S₆, a seventh switching tube S₇ and an eighth switching tube S₈ sequentially connected in series, and each switching tube includes an antiparallel diode. The first end of the input capacitor C₄ is electrically connected to a first end of the fifth switching tube S₅, and the second end of the input capacitor C₄ and a second end of the eighth switching tube S₈ are electrically connected to the input negative end. The flying capacitor C₅ has one end electrically connected to a first end of the sixth switching tube S₆, and the other end electrically connected to a second end of the seventh switching tube S₇. A second end of the sixth switching tube S₆ and a first end of the seventh switching tube S₇ are connected to form a central point of the switch bridge arm. The inductor L₂ has a first end electrically connected to the central point of the switch bridge arm, and a second end electrically connected to a first end of the output capacitorC₆. A second end of the output capacitor C₆ and a second end of the eighth switching tube S₈ are both electrically connected to an output negative end. The first end of the output capacitor C₆ is further electrically connected to an anode of the switching circuit D₉, and a cathode of the switching circuit D₉ is electrically connected to an output positive end. The first resistor R₁ and the fifth switching tube S₅ are connected in parallel, the second resistor R₂ and the third resistor R₃ are connected in parallel with the flying capacitor C₅, and the fourth resistor R₄ and the eighth switching tube S₈ are connected in parallel. Please refer to FIGS. 4 and 5 together. After receiving the start command, the first precharge switch K₁₁ is closed, the first precharge resistor R₁₁ is connected, the battery unit charges the input capacitor C₄, and the first precharge resistor R₁₁ only shall suppress a surge current that charges the input capacitor C₄. Please refer to FIGS. 4 and 6 together. When a voltage of the input capacitor C₄ is precharged to approach a voltage of the battery unit, the first precharge switch K₁₁ is open, the first main switch K₁ is closed, and the voltage of the input capacitor is equal to the voltage of the battery unit. Meanwhile a voltage of the flying capacitor C₅ is charged to be equal to one half of the voltage of the input capacitor C₄. In the precharging process, the switching tubes S₅ to S₈ are all off. After precharging the input capacitor C₄ and the flying capacitor C₅ completes, PWM control is performed on the switching tubes S₅ to S₈, and the circuit enters into the next working stage.

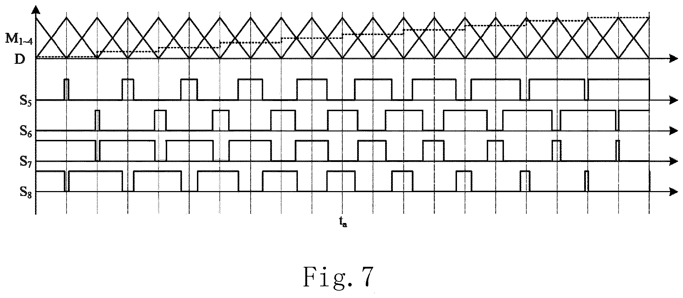

Duty ratios of the fifth switching tube S₅ to the eighth switching tube S₈ are controlled such as the flying capacitor switch circuit performs buck conversion on the voltage of the battery unit. For example, the duty ratios of the fifth switching tube S₅ to the eighth switching tube S₈ are adjusted by closed loop control. Duty ratios of the fifth switching tube S₅ and the sixth switching tube S₆ are gradually increased, and duty ratios of the seventh switching tube S₇ and the eighth switching tube S₈ are gradually decreased, such that an output voltage of the flying capacitor switch circuit is gradually increased, and the bus voltage is slowly established to the set voltage. FIG. 7 shows control signals of the flying capacitor switch circuit, the signals M₁~₄ are carrier waves of the switching tubes S₅ to S₈, the signals S₅~S₈ are pulse signals of the switching tubes S₅ to S₈, respectively, and a signal D is a modulation signal of the switching tubes S₅ to S₈.

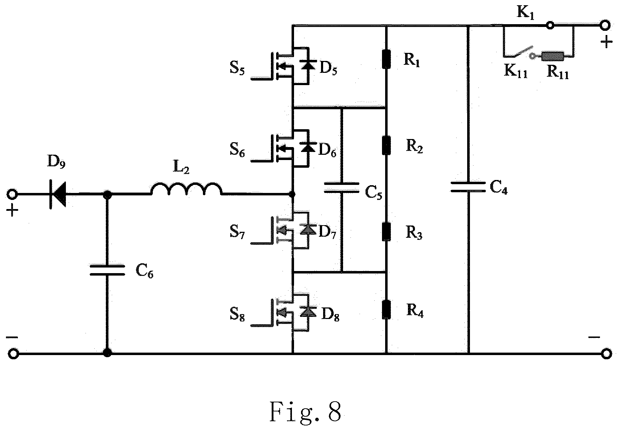

FIGS. 8 to 11 correspond to four working modes of the flying capacitor switch circuit, respectively. The PWM modulation signals of the flying capacitor switch circuit make the flying capacitor switch circuit switch among the four working modes. As shown in FIG. 7, duty ratios of the switching tubes S₅ and S₆ at an initial stage are relatively small, and an output voltage of the flying capacitor switch circuit is relatively small. With increase of the duty ratios of the switching tubes S₅ and S₆, the output voltage of the flying capacitor switch circuit is gradually increased.

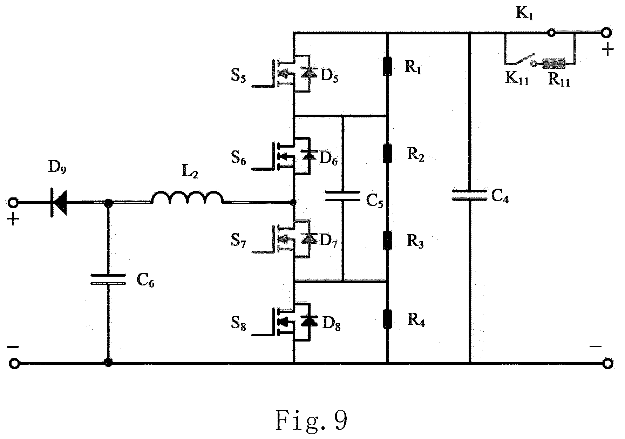

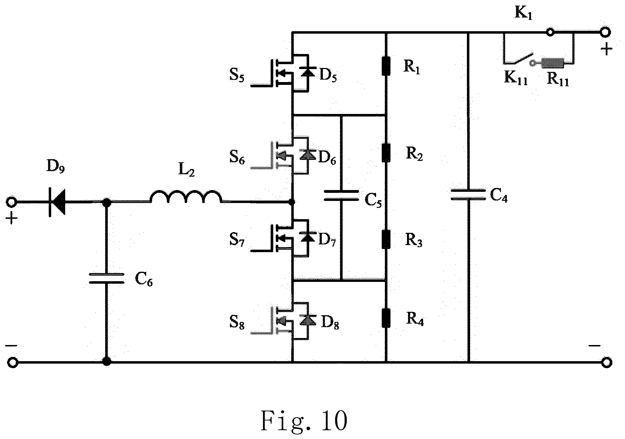

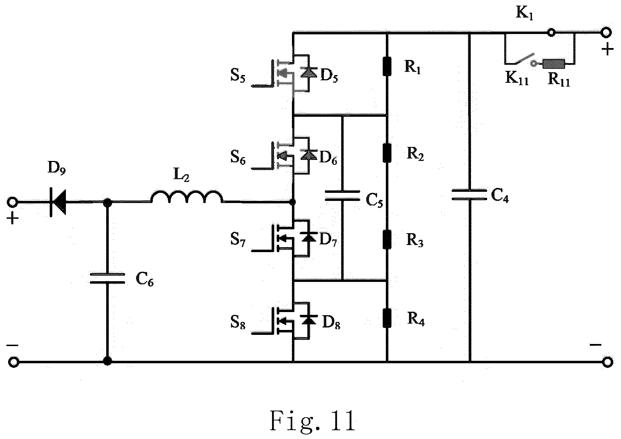

The output voltage of the flying capacitor switch circuit is less than one half of the input voltage before a time tₐ in FIG. 7, and the working modes of the flying capacitor switch circuit in a switch period include a working mode B in FIG. 9, a working mode C in FIG. 10 and a working mode D in FIG. 11. The working mode D is interposed between the working mode B and the working mode C. The output voltage of the flying capacitor switch circuit is greater than one half of the input voltage the time tₐ in FIG. 7, the working modes of the flying capacitor switch circuit in a switch period include a working mode A, the working mode B and the working mode C. The working mode A is interposed between the working mode B and the working mode C. The input voltage of the flying capacitor switch circuit is the voltage of the battery unit, and a voltage at both ends of the capacitor C₆ is substantially the output voltage of the flying capacitor switch circuit. Before the time tₐ, the duty ratios of the switching tubes S₅ and S₆ are less than 0.5, and after the time tₐ, the duty ratios of the switching tubes S₅ and S₆ are greater than 0.5, but the invention is not limited thereto.

Before the time tₐ, the output voltage of the flying capacitor switch circuit is less than one half of the input voltage, and hereinafter working conditions of the circuit in FIGS. 9, 10 and 11 are described correspondingly.

In the working mode B of FIG. 9, the sixth switching tube S₆ and the eighth switching tube S₈ are conducted, a current flows through the flying capacitor C₅, the sixth switching tube S₆, the inductor L₂, the eighth switching tube S₈ and the output capacitor C₆. At this time, the flying capacitor C₅ charges the output capacitor C₆.

In the working mode C of FIG. 10, the fifth switching tube S₅ and the seventh switching tube S₇ are conducted, and the input capacitor C₄ charges the flying capacitor C₅ through the fifth switching tube S₅, and charges the inductor L₂ and the output capacitor C₆ through the seventh switching tube S₇. At this time, energy is transmitted to the output end.

In the working mode D of FIG. 11, the seventh switching tube S₇ and the eighth switching tube S₈ are conducted, the inductor L₂ freewheels, and the output capacitor C₆ is discharged through the seventh switching tube S₇ and the eighth switching tube S₈. At this time, energy flows between the output capacitor C₆ and the inductor L₂.

After the time tₐ, the output voltage of the flying capacitor switch circuit is greater than one half of the input voltage, and hereinafter working conditions of the circuit in FIGS. 8, 9 and 11 are described correspondingly.

In the working mode A of FIG. 8, the fifth switching tube S₅ and the sixth switching tube S₆ are conducted, and the input capacitor C₄ charges the inductor L₂ through the fifth switching tube S₅ and the sixth switching tube S₆, and charges the output capacitor C₆. At this time, energy is transmitted to the output end.

In the working mode B of FIG. 9, the sixth switching tube S₆ and the eighth switching tube S₈ are conducted, a current flows through the flying capacitor C₅, the sixth switching tube S₆, the inductor L₂, the eighth switching tube S₈and the output capacitor C₆. At this time, the output capacitor C₆ charges the flying capacitor C₅.

In the working mode C of FIG. 10, the fifth switching tube S₅ and the seventh switching tube S₇ are conducted, a current flows through the input capacitor C₄, the fifth switching tube S₅, the flying capacitor C₅, the seventh switching tube S₇, the inductor L₂ and the output capacitor C₆. At this time, the output capacitor C₆ and the flying capacitor C₅ charge the input capacitor C₄.

With increase of the duty ratios of the fifth switching tube S₅ and the sixth switching tube S₆, a discharge time of the input capacitor C₄ is increased, such that the output voltage of the start circuit is gradually increased.

In this embodiment, structure and working process of the DC/DC converter are the same as that in the embodiment of FIG. 3, and details are not described here.

In the embodiments, the set voltage is equal to the voltage of the battery unit, and the switching circuit is a diode. The diode can automatically cut a power transmission path of the start unit when the bus voltage is greater than the voltage of the battery unit, thereby preventing power flow backward. So control is simple, and cost is low. However, the invention is not limited thereto. For example, the switching circuit is a switch or a relay. In some embodiments, the start circuit uses a boost-buck circuit, and the set voltage may be less than or greater than the voltage of the battery unit. Only if the energy storage system starts through the battery unit, an independent start unit shares the process of establishing the bus voltage from zero to the set voltage, and the DC/DC converter only shall complete establishing the bus voltage from the set voltage to the target voltage, which are both within the protection scope of the disclosure.

The energy storage system of the disclosure includes the independent start unit and the DC/DC converter simultaneously, expands a controllable range of the bus voltage, such that the process of establishing the bus voltage is flexibly controllable, and a voltage control dead zone is eliminated. Meanwhile, the precharge circuits in the energy storage system are all decoupled from the DC bus, such as DC equipment on the DC bus.

The invention further provides a start method of an energy storage system, which is applied to the energy storage system in the above embodiments. The start method includes: providing a start unit electrically connected between a battery unit and the DC bus; and when the energy storage system starts through the battery unit, operating the start unit to delivering power of the battery unit to the DC bus, thereby establishing a bus voltage to a set voltage. The start unit is controlled to operate to establish the voltage of the DC bus to the set voltage through the electric power of the battery unit.

The start method further includes: when the start unit establishes the bus voltage to the set voltage, operating the DC/DC converter to deliver power of the battery unit to the DC bus, thereby establishing the bus voltage from the set voltage to a target voltage. The DC/DC converter continues to establish the bus voltage to the target voltage through the electric power of the battery unit.

The start method further includes: judging whether to start the energy storage system through the battery unit; when a judging result is yes, outputting a start command to the start unit; and when the bus voltage is equal to the set voltage, outputting a control signal to the DC/DC converter.

When the bus voltage is greater than the set voltage, cut off a power transmission path of the start unit. As for the method of controlling the energy storage system and the achieved technical effect in this embodiment, description of the corresponding parts of the energy storage system provided in the above embodiments may be referred, and the details are not described here.

The energy storage system of the invention has self-started capability, and the process of establishing the bus voltage is flexibly controllable. And the precharge resistors in the energy storage system can be decoupled from the DC bus, such as capacitor capacity of the DC bus, mounting loads on the DC bus. Hardware topology of the system can be optimized.

Of course, the invention may further have various other embodiments, and in the case of not departing from spirit and essence of the invention, those skilled in the art shall make various corresponding modifications and variations according to the invention, but these corresponding modifications and variations shall belong to the protection scope of the appended claims of the invention.

## Claims

1. An energy storage system, **characterized in that**, comprising:
an energy storage converter having an AC end electrically connected to an AC power supply (GRID) or a load (AC LOAD), and a DC end electrically connected to a DC bus;
at least one battery unit (1, 2), each electrically connected to the DC bus through a DC/DC converter (DD1, DD2); and
a start unit (BS1) electrically connected between a battery unit (2) and the DC bus;
wherein when the energy storage system starts through the battery unit (2), the start unit (BS1) establishes a bus voltage to a set voltage through power of the battery unit (2).

2. The energy storage system according to claim 1, wherein the start unit comprises:
a start circuit having an input end electrically connected to the battery unit (2); and
a switching circuit having one end electrically connected to an output end of the start circuit, and the other end electrically connected to the DC bus.

3. The energy storage system according to any one of claims 1-2, wherein,
the set voltage is a voltage of the battery unit (2); and
the switching circuit is a diode (Ds) having an anode electrically connected to a positive output end of the start circuit, and a cathode electrically connected to the DC bus.

4. The energy storage system according to claim any one of claim s 1-3, wherein,
when the bus voltage is less than the set voltage, the switching circuit is conducted, and the start circuit outputs power to the DC bus; and
when the bus voltage is greater than the set voltage, the switching circuit is off, and the start circuit stops outputting electric power to the DC bus.

5. The energy storage system according to claim 1, wherein after the start unit (BS1) establishes the bus voltage to the set voltage, the at least one DC/DC converter (DD1, DD2) operates to establish the bus voltage from the set voltage to a target voltage through power of the battery unit (2).

6. The energy storage system according to any one of claims 1-5, further comprising a battery management unit (BMS) electrically connected to the start unit (BS1) and the DC/DC converter (DD1, DD2);
when the energy storage system starts through the battery unit (2), the battery management unit (BMS) outputs a start command to the start unit (BS1), and the start unit (BS1) operates; and
when the start circuit establishes the bus voltage to the set voltage, the battery management unit (BMS) outputs a control signal to the DC/DC converter (DD1, DD2), and the DC/DC converter (DD1, DD2) operates.

7. The energy storage system according to any one of claims 1-2, wherein the start circuit is a precharge circuit, and comprises a precharge resistor (R₁₁), a precharge switch (K₁₁) and a main switch (K₁).

8. The energy storage system according to any one of claims 1-2, wherein the start circuit comprises a buck circuit having at least one controllable switch, and PWM modulation is performed to the at least one controllable switch; wherein an output voltage of the buck circuit is gradually increased by controlling a duty ratio of the at least one controllable switch, such that the bus voltage is gradually increased from zero to the set voltage.

9. The energy storage system according to claim 8, wherein the set voltage is equal to the voltage of the battery unit (2), the switching circuit is a diode (D₉), and when the bus voltage is greater than the voltage of the battery unit (2), the diode (D₉) is reversely cut off.

10. The energy storage system according to claim 8, wherein the buck circuit is a flying capacitor switch circuit, and comprises a precharge circuit, an input capacitor (C₄), a first resistor (R₁), a second resistor (R₂), a third resistor (R₃), a fourth resistor (R₄), a flying capacitor (C₅), a first switching tube (S₅), a second switching tube (S₆), a third switching tube (S₇), a fourth switching tube (S₈) and an output inductor (L₂); wherein the input capacitor (C₄) has a first end electrically connected to the precharge circuit, and a second end electrically connected to an input negative end; the first resistor (R₁), the second resistor (R₂), the third resistor (R₃) and the fourth resistor (R₄) are sequentially connected in series between the first end and the second end of the input capacitor (C₄); the first switching tube (S₅), the second switching tube (S₆), the third switching tube (S₇) and the fourth switching tube (S₈) are sequentially connected in series between the first end and the second end of the input capacitor (C₄); a second end of the second switching tube (S₆) is electrically connected to a first end of the output inductor (L₂); the flying capacitor (C₅) is electrically connected in parallel with the second switching tube (S₆) and the third switching tube (S₇); the first resistor (R₁) and the first switching tube (S₅) are connected in parallel, the second resistor (R₂) and the third resistor (R₃) are connected in parallel with the flying capacitor (C₅), and the fourth resistor (R₄) and the fourth switching tube (S₈) are connected in parallel; a second end of the output inductor (L₂) is electrically connected to the switching circuit.

11. The energy storage system according to claim 10, wherein duty ratios of the first switching tube (S₅) and the second switching tube (S₆) are controlled to gradually increase, and duty ratios of the third switching tube (S₇) and the fourth switching tube (S₈) are controlled to gradually decrease, such that an output voltage of the flying capacitor switch circuit is gradually increased, and the bus voltage is gradually increased from zero to the set voltage.

12. A start method of an energy storage system, **characterized in that** the energy storage system comprising: an energy storage converter having an AC end electrically connected to an AC power supply (GRID) or a load (AC LOAD), and a DC end electrically connected to a DC bus; at least one battery unit (1, 2), each electrically connected to a low-voltage port of a DC/DC converter (DD1, DD2); and a high-voltage port of each DC/DC converter (DD1, DD2) electrically connected to the DC bus; and the method comprising:
providing a start unit (BS1) electrically connected between a battery unit (2) and the DC bus;
when the energy storage system starts through the battery unit (2), operating the start unit (BS1) to deliver power of the battery unit (2) to the DC bus, thereby establishing a bus voltage to a set voltage.

13. The start method according to claim 12, wherein when the bus voltage is established to the set voltage, operate the DC/DC converter (DD1, DD2) to deliver the power of the battery unit (2) to the DC bus, thereby establishing the bus voltage from the set voltage to a target voltage.

14. The start method according to claim 13, wherein when the DC/DC converter (DD1, DD2) operates and the bus voltage is greater than the set voltage, the start unit (BS1) is turned off.

15. The start method according to claim 13, further comprising:
judging whether to start the energy storage system through the battery unit (2);
when a judging result is yes, outputting a start command to the start unit (BS1); and
when the bus voltage is equal to the set voltage, outputting a control signal to the DC/DC converter (DD1, DD2).
